# EUROPEAN PATENT SPECIFICATION

(11) **EP 4 053 671 B1**
(45) Date of publication and mention of the grant of the patent: **27.09.2023**
(21) Application number: 19920632.7
(22) Date of filing: 01.11.2019
(51) Int. Cl.: G06F 1/16, G06F 3/0354, G06F 3/038, G06F 3/041, G06F 3/044

(54) **DEVICE OPENING/CLOSING COVER DETECTION METHOD, TOUCH CONTROLLER AND TOUCHPAD**
VERFAHREN ZUR ERKENNUNG DES ÖFFNENS/SCHLIESSENS DES DECKELS EINER VORRICHTUNG, BERÜHRUNGSSTEUERGERÄT UND TOUCHPAD
PROCÉDÉ DE DÉTECTION DE COUVERCLE D'OUVERTURE/DE FERMETURE DE DISPOSITIF, DISPOSITIF DE COMMANDE TACTILE ET PAVÉ TACTILE

(43) Date of publication of application: 07.09.2022
(73) Proprietor: Shenzhen Goodix Technology Co., Ltd., Shenzhen, Guangdong 518045 (CN)
(72) Inventor: HUANG, Haiquan, Shenzhen, Guangdong 518045 (CN); LU, Xu, Shenzhen, Guangdong 518045 (CN)
(74) Representative: Pfenning, Meinig & Partner mbB
(86) International application number: PCT/CN2019/115141
(87) International publication number: WO 2021/082007

(56) References cited:
- CN-A- 1 633 034
- CN-A- 103 139 355
- CN-A- 103 257 777
- CN-A- 103 257 777
- CN-A- 105 700 626
- US-A1- 2009 016 003
- US-A1- 2009 016 003
- US-A1- 2009 058 429

## Description

### TECHNICAL FIELD

Embodiments of the present application relate to the field of information technology, and more particularly, to a method for device cover opening and closing detection, a touch controller, a touch pad and an electronic device.

### BACKGROUND

For a notebook computer, it is necessary to be able to detect whether a user executes a cover opening or closing operation, so as to perform an operation such as turning off a screen when the user is detected to close the cover to reduce power consumption of the notebook computer, and to restore the corresponding functions when the user is detected to open the cover so as not to affect user operations. Therefore, how to effectively detect a cover opening and closing state of a device has become an urgent problem to be solved.
US20090058429A1 discloses a method for determining closure of an electronic device. The electronic device includes a top portion and a bottom portion, and may be connecting via a hinge or other closing mechanism. The top portion and/or the bottom portion may include one or more capacitive sensors which provide signals corresponding to physical contact and a controller coupled to the one or more capacitive sensors. The controller may operate to receive the signals from the one or more capacitive sensors, determine if the electronic device has been closed based on the received signals, and initiate a sequence of events corresponding to the closure of the electronic device.
US20090016003A1 discloses a portable computer having a display assembly coupled to a base assembly to alternate between a closed position and an open position. An input device disposed on the base assembly senses a contact with a portion of the display assembly to detect the display assembly in the closed position.

### SUMMARY

The invention is set out in the appended set of claims.

Embodiments of the present application provide a method for device cover opening and closing detection, a touch controller, a touch pad and an electronic device, which could effectively detect a cover opening and closing state of a device.

In a first aspect, provided is a method for detecting opening and closing of a device cover. The method includes: obtaining a detecting signal output by an output channel of the touch pad; and determining whether a cover opening and closing state of the electronic device varies according to a variation situation of the detecting signal.

In a possible implementation manner, the detecting signal is a detecting signal of a self-capacitance of the touch pad.

In a possible implementation manner, the determining whether the cover opening and closing state of the electronic device varies according to the variation situation of the detecting signal includes: determining that the cover opening and closing state of the electronic device varies when a variation of detecting signal(s) output by at least N of output channels is greater than a first preset value, where N is a positive integer.

In a possible implementation manner, the determining whether the cover opening and closing state of the electronic device varies according to the variation situation of the detecting signal includes: determining that the cover opening and closing state of the electronic device varies when a variation of an average value of detecting signals output by respective output channels of the touch pad is greater than a second preset value.

In a possible implementation manner, the detecting signal is a detecting signal of a mutual-capacitance of the touch pad.

In a possible implementation manner, the obtaining the detecting signal output by the output channel of the touch pad includes: capturing the detecting signal based on a first sampling frequency, where the first sampling frequency is within a noise frequency range of a display screen of the electronic device.

In a possible implementation manner, the determining whether the cover opening and closing state of the electronic device varies according to the variation situation of the detecting signal includes: determining that the cover opening and closing state of the electronic device varies when a variation of detecting signal(s) on sensing node(s) corresponding to at least M of output channels is greater than a third preset value, where M is a positive integer.

In a possible implementation manner, the detecting signal is a detecting signal of noise.

In a possible implementation manner, the obtaining the detecting signal output by the output channel of the touch pad includes: capturing the detecting signal based on a second sampling frequency when no driving signal is input, where the second sampling frequency is within a noise frequency range of a display screen of the electronic device.

In a possible implementation manner, the determining whether the cover opening and closing state of the electronic device varies according to the variation situation of the detecting signal includes: determining that the cover opening and closing state of the electronic device varies when a variation of the detecting signal at a specific frequency is greater than a third preset value.

In a possible implementation manner, the detecting signal is a detecting signal of a signal with a specific frequency emitted by a display screen of the electronic device.

In a possible implementation manner, the obtaining the detecting signal output by the output channel of the touch pad includes: capturing the detecting signal based on a third sampling frequency when no driving signal is input, where the third sampling frequency is the specific frequency.

In a possible implementation manner, the determining whether the cover opening and closing state of the electronic device varies according to the variation situation of the detecting signal includes: determining that the electronic device enters into a cover closing state when a signal value of the detecting signal is greater than a fourth preset value; and/or determining that the electronic device enters into a cover opening state when a signal value of the detecting signal is less than the fourth preset value.

In a possible implementation manner, the determining whether the cover opening and closing state of the electronic device varies according to the variation situation of the detecting signal includes: determining that the electronic device enters into a cover closing state when a variation rule of the detecting signal conforms to a variation rule of the signal with the specific frequency; and/or determining that the electronic device enters into a cover opening state when a variation rule of the detecting signal does not conform to the variation rule of the signal with the specific frequency.

In a possible implementation manner, the touch controller is a touch control chip.

In a second aspect, provided is a touch controller, including: a signal capturing unit configured to obtain a detecting signal output by an output channel of a touch pad of an electronic device; and a processing unit configured to determine whether a cover opening and closing state of the electronic device varies according to a variation situation of the detecting signal.

In a possible implementation manner, the detecting signal is a detecting signal of a self-capacitance of the touch pad.

In a possible implementation manner, the processing unit is configured to: determine that the cover opening and closing state of the electronic device varies when a variation of detecting signal(s) output by at least N of output channels is greater than a first preset value, where N is a positive integer.

In a possible implementation manner, the processing unit is configured to: determine that the cover opening and closing state of the electronic device varies when a variation of an average value of detecting signals output by respective output channels of the touch pad is greater than a second preset value.

In a possible implementation manner, the detecting signal is a detecting signal of a mutual-capacitance of the touch pad.

In a possible implementation manner, the signal capturing unit is configured to: capture the detecting signal based on a first sampling frequency, where the first sampling frequency is within a noise frequency range of a display screen of the electronic device.

In a possible implementation manner, the processing unit is configured to: determine that the cover opening and closing state of the electronic device varies when a variation of detecting signal(s) on sensing node(s) corresponding to at least M of output channels is greater than a third preset value, where M is a positive integer.

In a possible implementation manner, the detecting signal is a detecting signal of noise.

In a possible implementation manner, the signal capturing unit is configured to: capture the detecting signal based on a second sampling frequency when no driving signal is input, where the second sampling frequency is within a noise frequency range of a display screen of the electronic device.

In a possible implementation manner, the processing unit is configured to: determine that the cover opening and closing state of the electronic device varies when a variation of the detecting signal at a specific frequency is greater than a third preset value.

In a possible implementation manner, the detecting signal is a detecting signal of a signal with a specific frequency emitted by a display screen of the electronic device.

In a possible implementation manner, the signal capturing unit is configured to: capture the detecting signal based on a third sampling frequency when no driving signal is input, where the third sampling frequency is the specific frequency.

In a possible implementation manner, the processing unit is configured to: determine that the electronic device enters into a cover closing state when a signal value of the detecting signal is greater than a fourth preset value; and/or determine that the electronic device enters into a cover opening state when a signal value of the detecting signal is less than the fourth preset value.

In a possible implementation manner, the processing unit is configured to: determine that the electronic device enters into a cover closing state when a variation rule of the detecting signal conforms to a variation rule of the signal with the specific frequency; and/or determine that the electronic device enters into a cover opening state when a variation rule of the detecting signal does not conform to the variation rule of the signal with the specific frequency.

In a possible implementation manner, the touch controller is a touch control chip.

In a third aspect, provided is a touch pad, including: an output channel configured to output a detecting signal; and the touch controller according to the preceding second aspect and any one of the possible implementation manners of the second aspect.

In a fourth aspect, provided is an electronic device, including: the touch pad according to the preceding third aspect and any one of the possible implementation manners of the third aspect; and a display screen.

Based on the above technical solutions, since the display screen of the electronic device is close to the touch pad when the cover is closed, the display screen affects the detecting signal output by the output channel of the touch pad. Therefore, whether the electronic device executes a cover opening or closing operation can be determined according to the variation situation of the detecting signal output by the touch pad.

### BRIEF DESCRIPTION OF THE DRAWINGS

FIG. 1 is a schematic flowchart of a method for device cover opening and closing detection according to an embodiment of the present application.
FIG. 2 is a schematic diagram of a self-capacitive touch pad.
FIG. 3 is a schematic diagram of a mutual-capacitive touch pad.
FIG. 4 shows values of detecting signals of capacitance nodes on a mutual-capacitive touch pad in a cover opening state.
FIG. 5 shows values of detecting signals of capacitance nodes on a mutual-capacitive touch pad in a cover closing state.
FIG. 6 is a spectrum diagram of a detecting signal output by a touch pad in a cover opening state.
FIG. 7 is a spectrum diagram of a detecting signal output by a touch pad in a cover closing state.
FIGS. 8A and 8B are schematic diagrams of a signal with a specific frequency emitted by an electronic device.
FIG. 9 is a spectrum diagram of a detecting signal output by a touch pad in a cover opening state.
FIG. 10 is a spectrum diagram of a detecting signal output by a touch pad in a cover closing state.
FIG. 11 is a schematic block diagram of a touch controller according to an embodiment of the present application.

### DESCRIPTION OF EMBODIMENTS

Technical solutions of the present application are described below in combination with accompanying drawings.

An upper cover of a notebook computer is usually provided with a magnet, and the corresponding position of a lower cover is provided with a Hall sensor. In this way, when the notebook computer is in a cover opening state and a cover closing state, magnetic field intensities detected by the Hall sensor are different. Based on this, detection of the cover opening and closing state of the notebook computer can be realized. However, the Hall sensor and the magnet lead to increased costs.

An embodiment of the present application provides a method for a device cover opening and closing detection. By means of a touch pad in an electronic device, a cover opening and closing state of the electronic device is detected, which can realize the effective detection of the cover opening and closing state of the device without increasing additional costs.

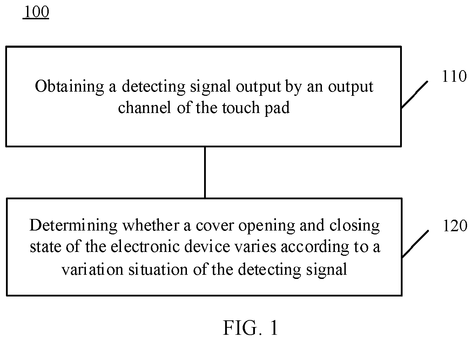

FIG. 1 is a schematic flowchart of a method for device cover opening and closing detection according to an embodiment of the present application. The method 100 is executed by a touch pad of an electronic device. The touch pad includes a touch controller, and the method 100 may be specifically executed by the touch controller. The touch controller may be a touch control chip. The electronic device may be, for example, a notebook computer, and the touch pad is a touch pad used for finger touch operations on the notebook computer.

As shown in FIG. 1, the method 100 includes the following steps:
in step 110, obtaining a detecting signal output by an output channel of the touch pad; and
in step 120, determining whether a cover opening and closing state of the electronic device varies according to a variation situation of the detecting signal.

Since the display screen of the electronic device is close to the touch pad when the cover is closed, the display screen affects the detecting signal output by the output channel of the touch pad. Therefore, in this embodiment, the touch controller can determine whether the electronic device executes a cover opening or closing operation according to the variation situation of the detecting signal.

The embodiment of the present application does not make any limitation on the time for the touch controller to perform cover opening and closing detection.

Optionally, the touch controller may periodically perform the device cover opening and closing detection, that is, executing the above solution according to a preset period. The period may be fixed or dynamic. For example, the touch controller can perform cover opening and closing detection in a period of 8 ms, that is, performing cover opening and closing detection every 8 ms; for another example, when the touch controller periodically performs device cover opening and closing detection, the length of each period can be different, for example, the first period is 8 ms, the second period is 10 ms, the third period is 8 ms, and the fourth period is 10 ms, ...; for another example, the touch controller performs cover opening and closing detection in a period of 8 ms within a duration, and performs cover opening and closing detection in a period of 10 ms in the next duration, for example, performing cover opening and closing detection every 8 ms in a T1 duration, and performing cover opening and closing detection every 10 ms in a subsequent T2 duration. The embodiment of the present application does not make any limitation on the period for the touch controller to execute device cover opening and closing detection; for another example, the period can vary within a certain range, and can vary according to a rule or not, for example, the period can vary within 8 ms-10 ms, that is, a time interval between two adjacent cover opening and closing detections randomly varies within 8 ms-10 ms or varies according to a rule.

Of course, the touch controller may not perform the device cover opening and closing detection according to a period. For example, the touch controller may perform device cover opening and closing detection when a certain event occurs or when a certain condition is satisfied. For example, when the touch controller detects there is no finger touch, it can perform device cover opening and closing detection, because usually when a user is executing an operation of opening or closing an upper cover of a device, a finger does not touch a touch pad.

Embodiments of the present application provide four manners of detecting device cover opening and closing using a touch pad, which will be described below respectively.

### Manner 1

The detecting signal output by the output channel of the touch pad is a detecting signal of a self-capacitance of the touch pad.

In this manner, the touch pad may be a self-capacitive touch pad, that is, the touch pad may detect a finger touch based on a self-capacitance detection manner. At this time, the detecting signal output by the output channel of the touch pad is a detecting signal of a self-capacitance.

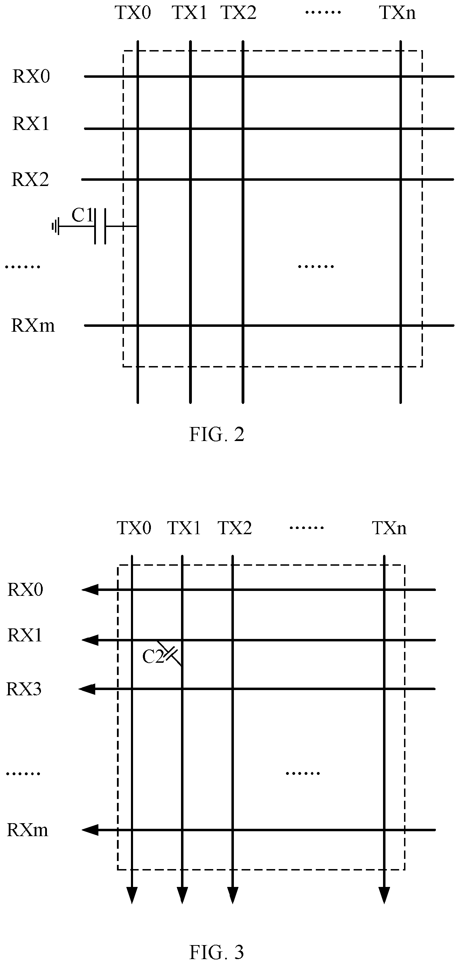

FIG. 2 is a schematic diagram of self-capacitance detection. The touch pad includes multiple channels in horizontal and vertical directions. Hereinafter, a horizontal channel is represented by RX, and a vertical channel is represented by TX. There is a capacitance between each channel and the ground, which is called a self-capacitance. Detection principles of respective channels in horizontal and vertical directions are the same. As an example, for a channel TX0, when the electronic device is in a cover opening state, a self-capacitance of the channel TX0 is C1. When the electronic device is in a cover closing state, the upper cover incorporates an additional capacitance on the channel TX0. Therefore, detection result of the self-capacitance of the channel TX0 varies significantly. Based on this change in a detecting signal output by each channel, whether the cover opening and closing state of the electronic device varies can be determined.

When a finger touches the touch pad, the finger also introduces an additional capacitance, which causes a detection result of a self-capacitance to vary. However, the finger touch is usually only at a local position of the touch pad, and only a detection result of a self-capacitance output on a channel touched by the finger can vary. When the upper cover of the electronic device is closed, the display screen on the upper cover covers the entire touch pad, and thus an additional capacitance is introduced on most of or even all of channels, causing detection results of self-capacitances output by these channels to vary. In other words, a finger touch cannot achieve value variation of all channels similar to that caused by a cover closing. Therefore, by counting signal values output by channels of the touch pad, whether it is a finger touch or a cover opening and closing operation can be determined.

In an implementation manner, whether a cover opening or closing operation is executed can be determined according to the number of output channels in which detecting signal vary.

For example, when a variation of detecting signal(s) output by at least N of output channels of the touch pad is greater than a first preset value, it is determined that the cover opening and closing state of the electronic device varies.

N is a positive integer, and N≤K. For the self-capacitance detection manner, both the horizontal channel and the vertical channel in the touch pad can be used as an output channel to output a detecting signal. Here, K may be the total number of all output channels of the touch pad, or the number of horizontal output channels, or the number of vertical output channels.

In this embodiment, when a variation of detecting signals of over a certain number or a certain proportion of output channels is greater than the first preset value, it can be considered that the electronic device performs a cover opening or closing operation. For example, when N/K is greater than 60%, it is considered that a cover opening or closing operation is performed.

As shown in FIG. 2, in a cover opening state, a driving signal is input to each channel. The driving signal can also be called a drive signal. As an example, in the channel TX0, the touch controller obtains a signal value of a detecting signal output by the channel TX0, which is S1; and in a cover closing state, a driving signal is input to each channel, and the touch controller obtains a signal value of the detecting signal output by the channel TX0, which is S2. The variation of the detecting signal of the channel TX0 is |S2-S1|, and |S2-S1| is greater than or equal to the first preset value. When a variation of detecting signals output by more than N channels is greater than or equal to the first preset value, it can be determined that a cover opening or closing operation is executed.

In another implementation manner, whether the cover opening or closing operation is performed can be determined according to a signal value of the detecting signal output by the output channel.

For example, when a variation of an average value of detecting signals output by multiple output channels of the touch pad is greater than a second preset value, it is determined that the cover opening and closing state of the electronic device varies.

In other words, the average value of the captured detecting signals output by respective output channels can be calculated, and when the average value varies significantly, it is considered that the cover opening or closing operation is performed.

Further, whether the cover opening or closing operation is performed can also be determined according to an average value of detecting signals. For example, when the average value of the detecting signals becomes larger, it can be determined that the cover closing operation is performed; and when the average value of the detecting signals becomes smaller, it can be determined that the cover opening operation is performed.

In manner 1, a detecting signal output by each output channel of the touch pad is a detecting signal of a self-capacitance of each output channel. The signal value of the detecting signal can reflect the magnitude of the self-capacitance of the output channel. Therefore, according to the variation of the signal value of the detecting signal, the cover opening and closing state of the device can be determined. For example, the detecting signal may be a voltage signal, and the cover opening and closing state of the device can be determined according to a variation of the voltage signal.

The touch controller needs to detect a finger touch in real time. Therefore, in the process of detecting the finger touch, optionally, the touch controller performs cover opening and closing detection at a certain frequency. That is, according to a preset period, detection of the cover opening and closing state is performed at intervals. In the rest of the time, the touch pad still performs detection of the finger touch. The cover opening and closing detection may be performed at a very high frequency, for example, the frequency is within 120 KHz-140 KHz.

### Manner 2

The detecting signal output by the output channel of the touch pad is a detecting signal of a mutual-capacitance of the touch pad.

In this manner, the touch pad may be a mutual-capacitive touch pad, that is, the touch pad may detect a finger touch based on a mutual-capacitance detection manner. At this time, the detecting signal output by the output channel of the touch pad is a mutual-capacitance detecting signal.

FIG. 3 is a schematic diagram of mutual-capacitance detection. The touch pad includes multiple channels in horizontal and vertical directions. Hereinafter, a vertical channel is represented by TX, and a horizontal channel is represented by RX. And the TX is a driving channel and the RX is a sensing channel. There is a capacitance C2 between each sensing channel RX and each driving channel TX, which is called a mutual-capacitance. When a driving signal is input to the driving channel TX, due to the presence of a mutual-capacitance, the sensing channel RX generates a sensing signal after receiving the driving signal. As an example, for a driving channel TX1 and a sensing channel RX1, as shown in FIG. 3, there is a mutual-capacitance C2 at a sensing node between the two channels. When performing mutual-capacitance detection, the touch controller sequentially inputs driving signals to the driving channels TX. When the driving signal is input to each driving channel TX, all the sensing channels RX simultaneously output detecting signals, which are also called sensing signals, so as to obtain a mutual-capacitance at each sensing node corresponding to the driving channel TX.

When a finger touches the touch pad, the finger also introduces an additional capacitance, which causes a detection result of a mutual-capacitance on a sensing node touched by the finger to vary. When an upper cover of the electronic device is closed, the upper cover also affects a mutual-capacitance of a sensing node it covers. Similar to manner 1, whether a cover opening or closing operation is executed can be determined according to the number or signal values of sensing nodes in which detecting signals vary. For related process, reference may be made to the description of the previous manner 1, and details are not described herein again for brevity.

However, with regard to a touch pad for mutual-capacitance detection, the mutual-capacitance at each sensing node may not be obviously affected after the upper cover is closed. Therefore, in the embodiment of the present application, impact of noise of a display screen on the upper cover on the touch pad can be further used to detect whether the cover opening and closing state of the electronic device varies.

In an implementation manner, in step 110, the detecting signal output by the output channel of the touch pad may be captured based on a first sampling frequency.

It should be understood that the touch controller needs to capture the signal output by the output channel at a certain frequency, and this frequency is a sampling frequency. The signal output by the output channel is sampled based on the sampling frequency, and a signal value of the output signal can be obtained according to sampled data.

The first sampling frequency is within a noise frequency range of a display screen of the electronic device.

For example, in a case of an LCD screen, a frequency range of a noise signal of the LCD screen is detected. And a sampling frequency at which the detecting signal is captured is set within the frequency range of the noise signal of the LCD screen. In this way, the touch pad can also detect the noise signal of the LCD screen. In a cover closing state, noise of the LCD screen radiates to the touch pad, which affects the mutual-capacitance of the touch pad. Therefore, the detecting signal on the sensing node of the touch pad varies. Based on a variation of the detecting signal, whether the cover opening and closing state of the electronic device varies can be determined.

In an implementation manner, in step 120, when a variation of detecting signal(s) on sensing node(s) corresponding to at least M of output channels is greater than a third preset value, it is determined that the cover opening and closing state of the electronic device varies.

M is a positive integer, and M≤K. K is the number of output channels of the touch pad. For the mutual-capacitance detection manner, the output channel in the touch pad may be a channel RX for outputting a detecting signal as shown in FIG. 3.

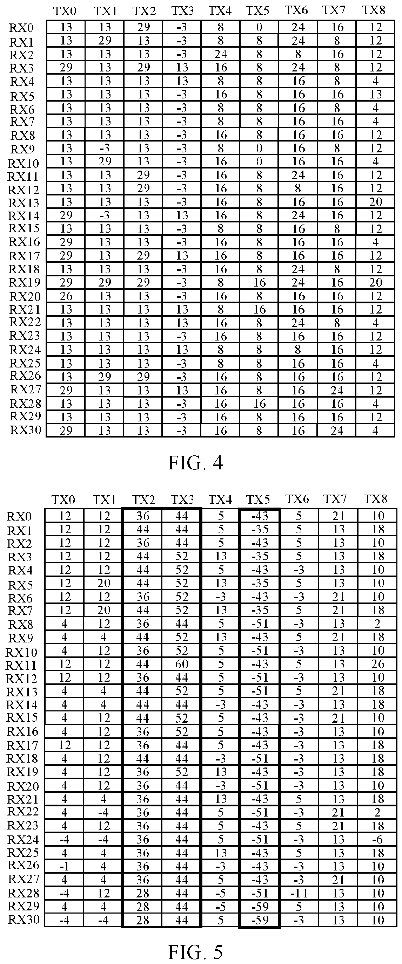

A noise frequency of the display screen is a frequency of noise inside the display screen, and can be detected by an oscilloscope for example. The display screen can be scanned row by row or column by column. As an example, in FIGS. 4 and 5, the display screen can be scanned column by column. When a certain column of the display screen is scanned, noise is generated on that column. FIG. 4 shows values of detecting signals on sensing nodes detected in a cover opening state. FIG. 5 shows values of detecting signals on sensing nodes detected in a cover closing state. It can be seen that, compared to FIG. 4, signal values on the corresponding sensing nodes on channels TX2, TX3, and TX5 in FIG. 5 vary significantly. At this time, it can be considered that the electronic device performs a cover closing operation. It can be seen that when signal values on the sensor nodes of respective columns have random large fluctuations among columns, it is considered that a cover opening or closing operation occurs. Specifically, a position where the signal values greatly fluctuate randomly is related to a position scanned in the display screen at that time.

In manner 2, a detecting signal output by each output channel of the touch pad is a detecting signal of a mutual-capacitance on a sensing node corresponding to each output channel. The signal value of the detecting signal can reflect the magnitude of the mutual-capacitance of the sensing node on the output channel. Therefore, according to the variation of the signal value of the detecting signal, the cover opening and closing state of the device can be determined. For example, the detecting signal may be a voltage signal, and the cover opening and closing state of the device can be determined according to a variation of the voltage signal.

The touch controller needs to detect a finger touch in real time. Therefore, in the process of detecting the finger touch, optionally, the touch controller performs cover opening and closing detection at a certain frequency. That is, according to a preset period, detection of the cover opening and closing state is performed at intervals. In the rest of the time, the touch pad still performs detection of the finger touch. The cover opening and closing detection may be performed at a very high frequency, for example, the frequency is within 120 KHz-140 KHz.

### Manner 3

The detecting signal output by the output channel of the touch pad is a detecting signal of noise.

In this manner, the touch pad may be a self-capacitive touch pad or a mutual-capacitive touch pad. When noise detection is performed, a driving signal may not be input. At this time, the detecting signal output by the output channel of the touch pad is a detecting signal of noise.

In an implementation manner, in step 110, the detecting signal output by the output channel of the touch pad may be detected based on a second sampling frequency.

The second sampling frequency is within a noise frequency range of a display screen of the electronic device.

It should be understood that, in step 110, a driving signal may not be input, so that the touch pad is used to detect noise when no driving signal is input. At this time, a noise signal of the display screen can be considered as a certain form of driving signal. When the display screen is in contact with the touch pad, the touch pad can receive the noise signal radiated by the display screen. Therefore, the output channel of the touch pad outputs the corresponding detecting signal. Here, the output channel used to output the detecting signal may be a horizontal channel or a vertical channel in the touch pad. According to a variation of the detecting signal output by the output channel, the touch controller determines whether the cover opening and closing state of the device varies.

In this embodiment, the noise of the display screen is still used. For example, an oscilloscope may be used to detect the frequency range of the noise signal of the display screen. And a sampling frequency at which the detecting signal output by the output channel of the touch pad is captured is set within the frequency range of the noise signal of the display screen. In this way, the touch controller can capture the noise signal of the display screen and make analysis. In a cover closing state, the noise of the display screen radiates to the touch pad, and therefore the detecting signal output by the touch pad varies. Based on a variation of the detecting signal, whether the cover opening and closing state of the electronic device varies can be determined.

In an implementation manner, in step 120, when a variation of the detecting signal at a specific frequency is greater than a third preset value, it is determined that the cover opening and closing state of the electronic device varies.

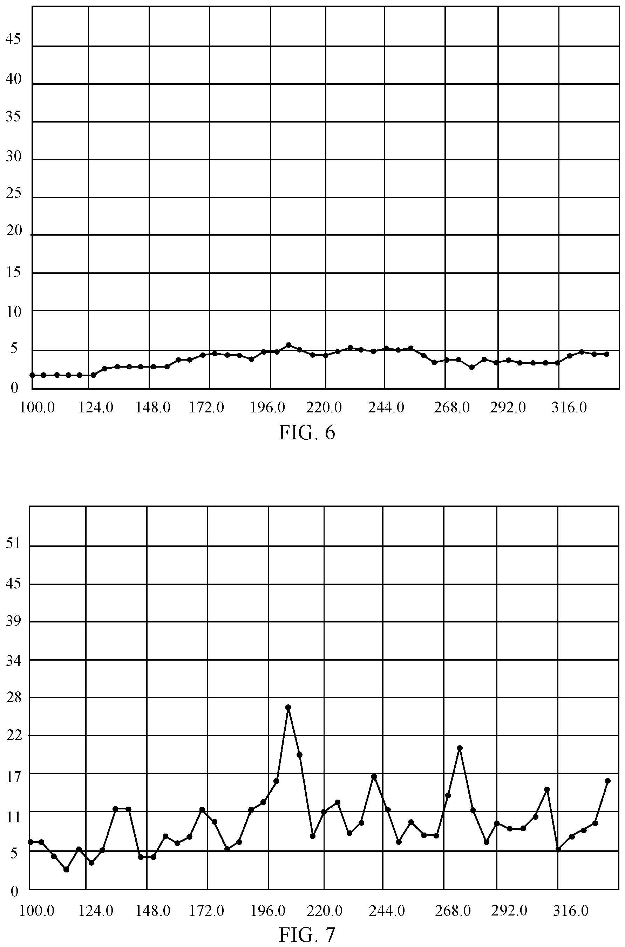

As an example, in FIGS. 6 and 7, in a cover opening state, the touch controller captures the detecting signal output by the output channel based on the second sampling frequency, and processes the captured detecting signal to obtain a spectrum diagram of the signal, as shown in the FIG. 6. It can be seen that distribution of noise captured in the cover opening state is relatively uniform. In a cover closing state, the touch pad captures the detecting signal output by the output channel based on the second sampling frequency, and processes the captured detecting signal to obtain a spectrum diagram of the detecting signal, as shown in the FIG. 7. It can be seen that after the cover is closed, an amplitude of the captured noise signal increases significantly at a specific frequency, for example, 130 KHz, 160 KHz, 200 KHz, and 270 KHz. For different display screens, the specific frequency may be different. By selecting appropriate specific frequency, whether the cover opening and closing state of the electronic device varies can be determined according to a variation situation of the amplitude of the detecting signal of the touch screen at these frequencies.

Manner 3 does not make any limitation on specific hardware implementation manners. For example, when cover opening and closing detection is performed, output channels can be switched to connect multiple output channels in the touch pad in parallel as one output channel. By capturing a detecting signal output by this output channel, whether the cover opening and closing state varies is determined according to spectrum information of the detecting signal. For another example, a detecting signal output by a specific output channel among multiple output channels may also be used to detect the cover opening and closing state.

In manner 3, when no driving signal is input, the detecting signal of the output channel of the touch pad is a detecting signal of noise. The signal value of the detecting signal can reflect the magnitude of the current noise of the touch pad. Since the display screen introduces greater noise to the touch pad when the cover is closed, the amplitude of the detecting signal output by the output channel of the touch pad increases significantly at the corresponding specific frequency. According to the variation of the signal value of the detecting signal, the cover opening and closing state of the device can be determined. For example, the detecting signal may be a voltage signal, and the cover opening and closing state of the device can be determined according to a variation of the voltage signal.

The touch controller needs to detect a finger touch in real time. Therefore, in the process of detecting the finger touch, optionally, the touch controller performs cover opening and closing detection at a certain frequency. That is, according to a preset period, detection of the cover opening and closing state is performed at intervals. In the rest of the time, the touch pad still performs detection of the finger touch. The cover opening and closing detection may be performed at a very high frequency, for example, the frequency is within 120 KHz-140 KHz.

### Manner 4

The detecting signal output by the output channel of the touch pad is a detecting signal of a signal with a specific frequency emitted by a display screen.

In this manner, the touch pad may be a self-capacitive touch pad or a mutual-capacitive touch pad. When the signal with the specific frequency is detected, a driving signal may not be input. At this time, the detecting signal output by the output channel of the touch pad is a detecting signal of the signal with the specific frequency.

In an implementation manner, in step 110, the detecting signal output by the output channel of the touch pad may be captured based on a third sampling frequency.

The third sampling frequency is within the range of the specific frequency. Specifically, the third sampling frequency is equal to the specific frequency.

It should be understood that, in step 110, a driving signal may not be input, so that the touch pad is used to detect the signal with the specific frequency emitted by the display screen when no driving signal is input. At this time, the signal with the specific frequency can be considered as a certain form of driving signal. When the display screen is in contact with the touch pad, the touch pad can receive the signal with the specific frequency radiated by the display screen and the output channel of the touch pad outputs the corresponding detecting signal. Here, the output channel used to output the detecting signal may be a horizontal channel or a vertical channel in the touch pad. According to a variation of the detecting signal output by the output channel, the touch controller determines whether the cover opening and closing state of the device varies.

In this embodiment, the display screen needs to actively emit a signal, and the signal is a signal for device cover opening and closing detection. The signal may have a specific frequency, or may also have a certain variation rule. A sampling frequency at which the touch pad captures the detecting signal is set to be equal to the specific frequency. In this way, the touch pad can capture the signal with the specific frequency emitted by the display screen and make analysis. In a cover closing state, the signal emitted by the display screen radiates to the touch pad, and therefore the detecting signal output by the output channel of the touch pad varies. Based on a variation situation of the detecting signal, whether a cover opening and closing state of the electronic device varies can be determined.

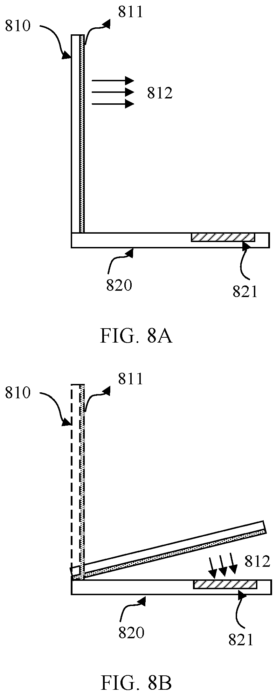

For example, as shown in FIGS. 8A and 8B, an upper cover 810 of an electronic device in FIG. 8A is opened, a display screen 811 on the upper cover emits a signal 812, and the signal 812 basically does not reach a touch pad 821 on a lower cover 820. As shown in FIG. 8B, in a process of closing the upper cover 810 of the electronic device, a strength of the signal 812 received by the touch pad 821 is increasing. Therefore, by means of detection of the signal 812 by the touch pad 821, the cover opening and closing state of the electronic device can be determined.

The signal with the specific frequency emitted by the display screen may have one or more fixed frequencies. The touch controller captures the detecting signal output by the output channel according to these frequencies, so as to determine the cover opening and closing state of the device according to the variation situation of the detecting signal.

For example, when a signal value of the detecting signal is greater than a fourth preset value, it is determined that the electronic device enters into a cover closing state; and/or when a signal value of the detecting signal is less than the fourth preset value, it is determined that the electronic device enters into a cover opening state.

That is, in the cover opening state, since the display screen is away from the touch pad, the strength of the signal with the specific frequency captured by the touch controller is less than the fourth preset value; while in the cover closing state, since the display screen is basically attached to the touch pad, the strength of the signal with the specific frequency captured by the touch controller is greater than the fourth preset value.

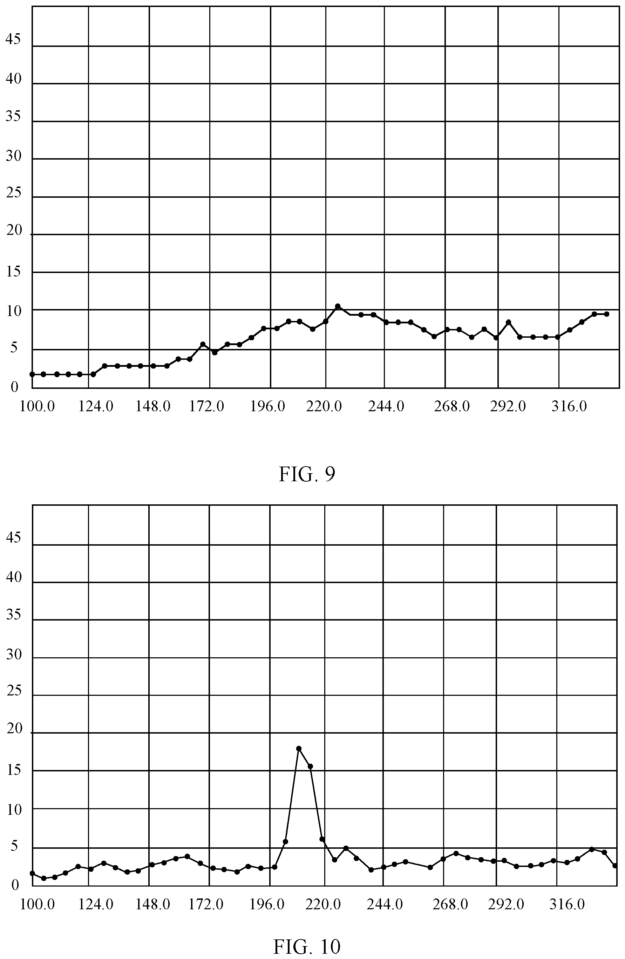

As an example, in FIGS. 9 and 10, suppose the frequency of the specific signal is 200 KHz, in the cover opening state, the touch controller captures the detecting signal output by the output channel based on the sampling frequency of 200 KHz, and processes the detecting signal to obtain a spectrum diagram of the signal, as shown in FIG. 9. It can be seen that distribution of the detecting signal captured in the cover opening state is relatively uniform. In a cover closing state, the touch controller captures the detecting signal output by the output channel based on the sampling frequency of 200 KHz, and processes the detecting signal to obtain a spectrum diagram of the signal, as shown in FIG. 10. It can be seen that an amplitude of the detecting signal captured by the touch controller increases significantly at 200 KHz, which indicates that the distance between the display screen and the touch pad is very small, and at this time, it can be considered that the electronic device has entered into the cover closing state.

The signal with the specific frequency emitted by the display screen may also have a fixed variation rule. The variation rule may be, for example, a variation rule of frequency, a variation rule of strength, or a variation rule of other parameters.

For example, when a variation rule of the detecting signal output by the output channel of the touch pad conforms to a variation rule of the signal with the specific frequency, it is determined that the electronic device enters into a cover closing state; and/or when a variation rule of the detecting signal does not conform to the variation rule of the signal with the specific frequency, it is determined that the electronic device enters into a cover opening state.

As an example, in terms of a variation rule of signal strength, when the strength of the signal with the specific frequency emitted by the electronic device varies with time regularly, the strength of the signal captured by the touch controller should also vary according to the same rule when the cover is closed. For example, the display screen of the electronic device changes the strength of the emitted signal every time unit, with 1 denoting a high strength and 0 denoting a low strength, and thus the variation rule of the strength of the signal with the specific frequency is 101010... When a variation rule of a signal value of the detecting signal captured by the touch controller is also 101010..., it is considered that the electronic device enters into a cover closing state; and/or when a variation rule of a signal value of the detecting signal captured by the touch controller is not 101010..., it is considered that the electronic device enters into a cover opening state.

Other protocols can also be agreed between the display screen and the touch pad, and the signal with the specific frequency emitted by the display screen is detected according to the protocol. The touch pad receives a signal emitted from the display screen, and the touch controller determines the cover opening and closing state of the device according to whether the captured signal meets a protocol.

In this embodiment, the signal emitted by the display screen has a specific frequency, and the specific frequency may include one or more frequencies, or may be a frequency range. Compared with the noise detection manner adopted in manner 3, manner 4 adopts the signal with the specific frequency actively emitted by the display screen for cover opening and closing detection, and thus has better stability and more accurate detection effects due to its strong pertinence.

Manner 4 does not make any limitation on specific hardware implementation manners. For example, when cover opening and closing detection is performed, output channels can be switched to connect multiple output channels in the touch pad in parallel as one output channel. By capturing a detecting signal output by this channel, whether the cover opening and closing state varies is determined according to spectrum information of the detecting signal. For another example, a detecting signal output by a specific output channel among multiple output channels may also be used to detect the cover opening and closing state.

An emitter may be installed on the display screen to emit the signal with the specific frequency. Alternatively, for a touch-sensitive display screen, since the display screen also has a touch controller inside, the touch controller can be directly used to emit the signal with the specific frequency.

In manner 4, when no driving signal is input, the detecting signal output by the output channel of the touch pad is a detecting signal of the signal with the specific frequency. The signal value of the detecting signal can reflect the magnitude of the signal with the specific frequency emitted by the display screen and received by the touch pad. Since the distance between the display screen and the touch pad is very close when the cover is closed, the amplitude of the detecting signal output by the output channel of the touch pad increases significantly at the specific frequency. According to the variation of the amplitude of the detecting signal, the cover opening and closing state of the device can be determined. For example, the detecting signal may be a voltage signal, and the cover opening and closing state of the device can be determined according to a variation of the voltage signal.

The touch controller needs to detect a finger touch in real time. Therefore, in the process of detecting the finger touch, optionally, the touch controller performs cover opening and closing detection at a certain frequency. That is, according to a preset period, detection of the cover opening and closing state is performed at intervals. In the rest of the time, the touch pad still performs detection of the finger touch. The cover opening and closing detection may be performed at a very high frequency, for example, the frequency is within 120 KHz-140 KHz.

In the above various implementation manners, the operation executed by the touch pad may be executed by the display screen, and at the same time the operation executed by the display screen may be executed by the touch pad. For example, for a display screen that can realize a touch function, that is, a touch screen, since it also has a touch controller, a signal with a specific frequency can be input into each channel of the touch pad, and the display screen detects the signal with the specific frequency emitted by the touch pad to determine a cover opening and closing state according to a detection result; for another example, since a keyboard affects the detecting signal output by the output channel of the display screen after the cover is closed, the touch controller in the display screen can determine the cover opening and closing state according to the variation situation of the detecting signal. In other words, in the above various embodiments, the operation executed between the touch pad and the display screen can be interchanged, and the device cover opening and closing detection can still be realized. For the corresponding detection manners, reference may be made to the above related description, and details are not described herein again for brevity.

Based on the above four manners, an existing touch pad of an electronic device can be used to achieve device cover opening and closing detection, and there is no need to additionally provide a Hall sensor and a magnet, which reduces device costs.

Generally, when a distance between a display screen and a touch pad is greater than about 5 mm, impact of the display screen on the touch pad can disappear.

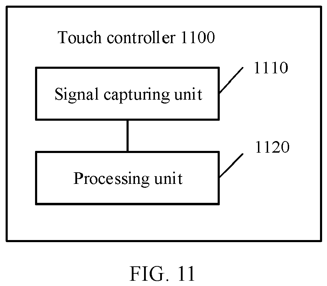

An embodiment of the present application further provides a touch controller. As shown in FIG. 11, the touch controller 1100 may be, for example, a touch control chip. The touch controller 1100 includes:
a signal capturing unit 1110 configured to obtain a detecting signal output by an output channel of a touch pad 1100 of an electronic device; and
a processing unit 1120 configured to determine whether a cover opening and closing state of the electronic device varies according to a variation situation of the detecting signal.

The signal capturing unit 1110 may include multiple output channels, for example, including the horizontal channels and the vertical channels shown in FIGS. 2 and 3. The output channel is used to output a detecting signal of a self-capacitance, a detecting signal of a mutual-capacitance, or a detecting signal of noise.

Since a display screen of the electronic device is close to the touch pad when the cover is closed, the display screen affects the detecting signal output by the output channel of the touch pad. Therefore, according to the variation situation of the detecting signal output by the output channel of the touch pad, whether the electronic device performs a cover opening or closing operation can be determined.

Optionally, the detecting signal is a detecting signal of a self-capacitance of the touch pad.

Optionally, the processing unit 1120 is configured to: determine that the cover opening and closing state of the electronic device varies when a variation of detecting signal(s) output by at least N of output channels is greater than a first preset value, where N is a positive integer.

Optionally, the processing unit 1120 is configured to: determine that the cover opening and closing state of the electronic device varies when a variation of an average value of detecting signals output by respective output channels of the touch pad is greater than a second preset value.

Optionally, the detecting signal is a detecting signal of a mutual-capacitance of the touch pad.

Optionally, the signal capturing unit 1110 is configured to: capture the detecting signal based on a first sampling frequency, where the first sampling frequency is within a noise frequency range of a display screen of the electronic device.

Optionally, the processing unit 1120 is configured to: determine that the cover opening and closing state of the electronic device varies when a variation of detecting signal(s) on sensing node(s) corresponding to at least M of output channels is greater than a third preset value, where M is a positive integer.

Optionally, the detecting signal is a detecting signal of noise.

Optionally, the signal capturing unit 1110 is configured to: capture the detecting signal based on a second sampling frequency when no driving signal is input, where the second sampling frequency is within a noise frequency range of a display screen of the electronic device.

Optionally, the processing unit 1120 is configured to: determine that the cover opening and closing state of the electronic device varies when a variation of the detecting signal at a specific frequency is greater than a third preset value.

Optionally, the detecting signal is a detecting signal of a signal with a specific frequency emitted by a display screen of the electronic device.

Optionally, the signal capturing unit 1110 is configured to: capture the detecting signal based on a third sampling frequency when no driving signal is input, where the third sampling frequency is the specific frequency.

Optionally, the processing unit 1120 is configured to: determine that the electronic device enters into a cover closing state when a signal value of the detecting signal is greater than a fourth preset value; and/or determine that the electronic device enters into a cover opening state when a signal value of the detecting signal is less than the fourth preset value.

Optionally, the processing unit 1120 is configured to: determine that the electronic device enters into a cover closing state when a variation rule of the detecting signal conforms to a variation rule of the signal with the specific frequency; and/or determine that the electronic device enters into a cover opening state when a variation rule of the detecting signal does not conform to the variation rule of the signal with the specific frequency.

It should be understood that the above and other operations and/or functions of various units of the touch controller according to the embodiment of the present application shown in FIG. 11 are respectively used to realize the corresponding flow of the method for cover opening and closing detection in FIG. 1, and details are not described herein again for brevity.

An embodiment of the present application further provides a touch pad including: an output channel configured to output a detecting signal; and the touch controller in the above various embodiments of the present application.

An embodiment of the present application further provides an electronic device including: the touch pad in the above various embodiments of the present application; and a display screen.

The display screen may be a normal unfolded display screen, or may be a foldable display screen or called a flexible display screen.

By way of example and not limitation, the electronic device in the embodiment of the present application may be portable or mobile computing devices such as a terminal device, a mobile phone, a tablet computer, a notebook computer, a desktop computer, a gaming device, an in-vehicle electronic device or a wearable smart device, and other electronic devices such as an electronic database, an automobile and an automated teller machine (ATM). The wearable smart device is full-featured and large-sized and can realize complete or partial functions without relying on a smart phone, such as a smart watch or smart glasses, and only focuses on a certain type of application function, and shall be used in cooperation with other devices such as a smart phone, for example, various types of smart bracelets, smart jewelry and other devices for physical sign monitoring.

It should be noted that, in a case of no conflict, the various embodiments and/or the technical features in the various embodiments described in the present application may be combined with each other arbitrarily.

It should be noted that specific examples in embodiments of the present application are just for helping those skilled in the art better understand the embodiments of the present application, rather than for limiting the scope of the embodiments of the present application. Those skilled in the art can make various improvements and variations on the basis of the above embodiments.

The foregoing descriptions are merely specific embodiments of the present application, but the protection scope of the present application is not limited thereto, those skilled in the art who are familiar with the art could readily think of variations or substitutions within the technical scope disclosed by the present application. Therefore, the protection scope of the present application shall be subject to the protection scope of the claims.

## Claims

1. A method for device cover opening and closing detection, wherein the method is executed by a touch controller in a touch pad of an electronic device, the touch pad is located on a lower cover of the electronic device, a display screen is located on an upper cover of the electronic device, and **characterised in that** the method comprises:
obtaining (110) a detecting signal output by an output channel of the touch pad, wherein the display screen of the electronic device is close to the touch pad when the upper cover and the lower cover are closed, so that the display screen affects the detecting signal output by the output channel of the touch pad; and
determining (120) whether a cover opening and closing state of the electronic device varies according to a variation situation of the detecting signal caused by the display screen.

2. The method according to claim 1, wherein the detecting signal is a detecting signal of a self-capacitance of the touch pad.

3. The method according to claim 2, wherein the determining (120) whether the cover opening and closing state of the electronic device varies according to the variation situation of the detecting signal comprises:
determining that the cover opening and closing state of the electronic device varies when a variation of detecting signal(s) output by at least N of output channels is greater than a first preset value, where N is a positive integer; or
determining that the cover opening and closing state of the electronic device varies when a variation of an average value of detecting signals output by respective output channels of the touch pad is greater than a second preset value.

4. The method according to claim 1, wherein the detecting signal is a detecting signal of a mutual-capacitance of the touch pad,
wherein the obtaining (110) the detecting signal output by the output channel of the touch pad comprises:
capturing the detecting signal based on a first sampling frequency, wherein the first sampling frequency is within a noise frequency range of a display screen of the electronic device; and
wherein the determining (120) whether the cover opening and closing state of the electronic device varies according to the variation situation of the detecting signal comprises:
determining that the cover opening and closing state of the electronic device varies when a variation of detecting signal(s) on sensing node(s) corresponding to at least M of output channels is greater than a third preset value, where M is a positive integer.

5. The method according to claim 1, wherein the detecting signal is a detecting signal of noise,
wherein the obtaining (110) the detecting signal output by the output channel of the touch pad comprises:
capturing the detecting signal based on a second sampling frequency when no driving signal is input, wherein the second sampling frequency is within a noise frequency range of a display screen of the electronic device; and
wherein the determining (120) whether the cover opening and closing state of the electronic device varies according to the variation situation of the detecting signal comprises:
determining that the cover opening and closing state of the electronic device varies when a variation of the detecting signal at a specific frequency is greater than a third preset value.

6. The method according to claim 1, wherein the detecting signal is a detecting signal of a signal with a specific frequency emitted by a display screen of the electronic device, wherein the obtaining (110) the detecting signal output by the output channel of the touch pad comprises:
capturing the detecting signal based on a third sampling frequency when no driving signal is input, wherein the third sampling frequency is the specific frequency.

7. The method according to claim 6, wherein the determining (120) whether the cover opening and closing state of the electronic device varies according to the variation situation of the detecting signal comprises:
determining that the electronic device enters into a cover closing state when a signal value of the detecting signal is greater than a fourth preset value or a variation rule of the detecting signal conforms to a variation rule of the signal with the specific frequency; or
determining that the electronic device enters into a cover opening state when a signal value of the detecting signal is less than the fourth preset value or a variation rule of the detecting signal does not conform to the variation rule of the signal with the specific frequency.

8. A touch controller, comprising:
a signal capturing unit (1110) configured to obtain a detecting signal output by an output channel of a touch pad of an electronic device, wherein the touch pad is located on a lower cover of the electronic device, a display screen is located on an upper cover of the electronic device, and **characterised in that** the display screen of the electronic device is close to the touch pad when the upper cover and the lower cover are closed, so that the display screen affects the detecting signal output by the output channel of the touch pad; and
a processing unit (1120) configured to determine whether a cover opening and closing state of the electronic device varies according to a variation situation of the detecting signal.

9. The touch controller according to claim 8, wherein the detecting signal is a detecting signal of a self-capacitance of the touch pad.

10. The touch controller according to claim 9, wherein the processing unit (1120) is configured to:
determine that the cover opening and closing state of the electronic device varies when a variation of detecting signal(s) output by at least N of output channels is greater than a first preset value, where N is a positive integer; or
determine that the cover opening and closing state of the electronic device varies when a variation of an average value of detecting signals output by respective output channels of the touch pad is greater than a second preset value.

11. The touch controller according to claim 8, wherein the detecting signal is a detecting signal of a mutual-capacitance of the touch pad,
wherein the signal capturing unit (1110) is configured to: capture the detecting signal based on a first sampling frequency, wherein the first sampling frequency is within a noise frequency range of a display screen of the electronic device; and
wherein the processing unit (1120) is configured to: determine that the cover opening and closing state of the electronic device varies when a variation of detecting signal(s) on sensing node(s) corresponding to at least M of output channels is greater than a third preset value, where M is a positive integer.

12. The touch controller according to claim 11, wherein the detecting signal is a detecting signal of noise,
wherein the signal capturing unit (1110) is configured to: capture the detecting signal based on a second sampling frequency when no driving signal is input, wherein the second sampling frequency is within a noise frequency range of a display screen of the electronic device; and
wherein the processing unit (1120) is configured to: determine that the cover opening and closing state of the electronic device varies when a variation of the detecting signal at a specific frequency is greater than a third preset value.

13. The touch controller according to claim 8, wherein the detecting signal is a detecting signal of a signal with a specific frequency emitted by a display screen of the electronic device, wherein the signal capturing unit (1110) is configured to:
capture the detecting signal based on a third sampling frequency when no driving signal is input, wherein the third sampling frequency is the specific frequency.

14. The touch controller according to claim 13, wherein the processing unit (1120) is configured to:
determine that the electronic device enters into a cover closing state when a signal value of the detecting signal is greater than a fourth preset value or a variation rule of the detecting signal conforms to a variation rule of the signal with the specific frequency; or
determine that the electronic device enters into a cover opening state when a signal value of the detecting signal is less than the fourth preset value or a variation rule of the detecting signal does not conform to the variation rule of the signal with the specific frequency.

15. A touch pad, comprising:
an output channel configured to output a detecting signal; and
the touch controller according to any of the preceding claims 8 to 14.

## Patentansprüche

1. Verfahren zum Erkennen des Öffnens und Schließens einer Vorrichtungsabdeckung, wobei das Verfahren durch eine Berührungssteuerung in einem Touchpad einer elektronischen Vorrichtung ausgeführt wird, wobei sich das Touchpad auf einer unteren Abdeckung der elektronischen Vorrichtung befindet, wobei sich ein Anzeigebildschirm auf einer oberen Abdeckung der elektronischen Vorrichtung befindet, und **dadurch gekennzeichnet ist, dass** das Verfahren umfasst
Erhalten (110) eines Erkennungssignal, das von einem Ausgangskanal des Touchpads ausgegeben wird, wobei sich der Anzeigebildschirm der elektronischen Vorrichtung in der Nähe des Touchpads befindet, wenn die obere Abdeckung und die untere Abdeckung geschlossen sind, so dass der Anzeigebildschirm das Erkennungssignal beeinflusst, das von dem Ausgangskanal des Touchpads ausgegeben wird; und
Bestimmen (120), ob ein Öffnungs- und Schließzustand der Abdeckung der elektronischen Vorrichtung gemäß einer Variationssituation des durch den Anzeigebildschirm verursachten Erfassungssignals variiert.

2. Verfahren nach Anspruch 1, wobei das Erkennungssignal ein Erkennungssignal einer Eigenkapazität des Touchpads ist.

3. Verfahren nach Anspruch 2, wobei das Bestimmen (120), ob der Öffnungs- und Schließzustand der Abdeckung der elektronischen Vorrichtung gemäß der Variationssituation des Erfassungssignals variiert, umfasst:
Bestimmen, dass der Öffnungs- und Schließzustand der Abdeckung der elektronischen Vorrichtung variiert, wenn eine Variation des/der von mindestens N Ausgangskanälen ausgegebenen Erkennungssignals/e größer ist als ein erster voreingestellter Wert, wobei N eine positive ganze Zahl ist; oder
Bestimmen, dass der Öffnungs- und Schließzustand der Abdeckung der elektronischen Vorrichtung variiert, wenn eine Variation eines Durchschnittswerts von Erkennungssignalen, die von jeweiligen Ausgangskanälen des Touchpads ausgegeben werden, größer ist als ein zweiter voreingestellter Wert.

4. Verfahren nach Anspruch 1, wobei das Erkennungssignal ein Erkennungssignal einer Gegenkapazität des Touchpads ist,
wobei das Erhalten (110) des Erkennungssignals, das von dem Ausgangskanal des Touchpads ausgegeben wird, umfasst:
Erfassen des Erkennungssignals basierend auf einer ersten Abtastfrequenz, wobei die erste Abtastfrequenz innerhalb eines Rauschfrequenzbereichs eines Anzeigebildschirms der elektronischen Vorrichtung liegt; und
wobei das Bestimmen (120), ob der Öffnungs- und Schließzustand der Abdeckung der elektronischen Vorrichtung gemäß der Variationssituation des Erfassungssignals variiert, umfasst:
Bestimmen, dass sich der Öffnungs- und Schließzustand der Abdeckung der elektronischen Vorrichtung ändert, wenn eine Änderung des/der Erkennungssignale(s) an dem/den Sensorknoten, der/die mindestens M Ausgangskanälen entspricht/entsprechen, größer ist als ein dritter voreingestellter Wert, wobei M eine positive ganze Zahl ist.

5. Verfahren nach Anspruch 1, wobei das Erkennungssignal ein Rauscherkennungssignal ist,
wobei das Erhalten (110) des Erkennungssignals, das von dem Ausgangskanal des Touchpads ausgegeben wird, umfasst:
Erfassen des Erkennungssignals basierend auf einer zweiten Abtastfrequenz, wenn kein Ansteuersignal eingegeben wird, wobei die zweite Abtastfrequenz innerhalb eines Rauschfrequenzbereichs eines Anzeigebildschirms der elektronischen Vorrichtung liegt; und
wobei das Bestimmen (120), ob der Öffnungs- und Schließzustand der Abdeckung der elektronischen Vorrichtung gemäß der Variationssituation des Erfassungssignals variiert, umfasst:
Bestimmen, dass der Öffnungs- und Schließzustand der Abdeckung der elektronischen Vorrichtung variiert, wenn eine Variation des Erkennungssignals bei einer spezifischen Frequenz größer als ein dritter voreingestellter Wert ist.

6. Verfahren nach Anspruch 1, wobei das Erkennungssignal ein Erkennungssignal eines Signals mit einer spezifischen Frequenz ist, das von einem Anzeigebildschirm der elektronischen Vorrichtung ausgesendet wird, wobei das Erhalten (110) des Erkennungssignals, das von dem Ausgangskanal des Touchpads ausgegeben wird, umfasst:
Erfassen des Erkennungssignals basierend auf einer dritten Abtastfrequenz, wenn kein Ansteuersignal eingegeben wird, wobei die dritte Abtastfrequenz die spezifische Frequenz ist.

7. Verfahren nach Anspruch 6, wobei das Bestimmen (120), ob der Öffnungs- und Schließzustand der Abdeckung der elektronischen Vorrichtung gemäß der Variationssituation des Erfassungssignals variiert, umfasst:
Bestimmen, dass die elektronische Vorrichtung in einen Schließzustand der Abdeckung eintritt, wenn ein Signalwert des Erkennungssignals größer als ein vierter voreingestellter Wert ist oder eine Variationsregel des Erkennungssignals mit einer Variationsregel des Signals mit der spezifischen Frequenz übereinstimmt; oder
Bestimmen, dass die elektronische Vorrichtung in einen Öffnungszustand der Abdeckung eintritt, wenn ein Signalwert des Erkennungssignals kleiner als der voreingestellte vierte Wert ist oder eine Variationsregel des Erkennungssignals nicht mit der Variationsregel des Signals mit der spezifischen Frequenz übereinstimmt.

8. Berührungssteuerung, umfassend:
eine Signalerfassungseinheit (1110), die dazu ausgelegt ist, ein Erkennungssignal zu erhalten, das von einem Ausgangskanal eines Touchpads einer elektronischen Vorrichtung ausgegeben wird, wobei das Touchpad auf einer unteren Abdeckung der elektronischen Vorrichtung angeordnet ist, ein Anzeigebildschirm auf einer oberen Abdeckung der elektronischen Vorrichtung angeordnet ist und **dadurch gekennzeichnet ist, dass**
sich der Anzeigebildschirm der elektronischen Vorrichtung in der Nähe des Touchpads befindet, wenn die obere Abdeckung und die untere Abdeckung geschlossen sind, so dass der Anzeigebildschirm das Erkennungssignal beeinflusst, das von dem Ausgangskanal des Touchpads ausgegeben wird; und
eine Verarbeitungseinheit (1120), die dazu ausgelegt ist, zu bestimmen, ob ein Öffnungs- und Schließzustand der Abdeckung der elektronischen Vorrichtung gemäß einer Variationssituation des Erkennungssignals variiert.

9. Berührungssteuerung nach Anspruch 8, wobei das Erkennungssignal ein Erkennungssignal einer Eigenkapazität des Touchpads ist.

10. Berührungssteuerung nach Anspruch 9, wobei die Verarbeitungseinheit (1120) dazu ausgelegt ist:
zu bestimmen, dass der Öffnungs- und Schließzustand der Abdeckung der elektronischen Vorrichtung variiert, wenn eine Variation des/der von mindestens N Ausgangskanälen ausgegebenen Erkennungssignals/e größer ist als ein erster voreingestellter Wert, wobei N eine positive ganze Zahl ist; oder
zu bestimmen, dass der Öffnungs- und Schließzustand der Abdeckung der elektronischen Vorrichtung variiert, wenn eine Variation eines Durchschnittswerts von Erkennungssignalen, die von jeweiligen Ausgangskanälen des Touchpads ausgegeben werden, größer ist als ein zweiter voreingestellter Wert.

11. Berührungssteuerung nach Anspruch 8, wobei das Erkennungssignal ein Erkennungssignal einer Gegenkapazität des Touchpads ist,
wobei die Signalerfassungseinheit (1110) dazu ausgelegt ist: das Erkennungssignal basierend auf einer ersten Abtastfrequenz zu erfassen, wobei die erste Abtastfrequenz innerhalb eines Rauschfrequenzbereichs eines Anzeigebildschirms der elektronischen Vorrichtung liegt; und
wobei die Verarbeitungseinheit (1120) dazu ausgelegt ist: zu bestimmen, dass der Öffnungs- und Schließzustand der Abdeckung der elektronischen Vorrichtung variiert, wenn eine Variation des/der Erkennungssignale(s) an dem/den Sensorknoten, der/die mindestens M Ausgangskanälen entspricht/entsprechen, größer ist als ein dritter voreingestellter Wert, wobei M eine positive ganze Zahl ist.

12. Berührungssteuerung nach Anspruch 11, wobei das Erkennungssignal ein Rauscherkennungssignal ist,
wobei die Signalerfassungseinheit (1110) dazu ausgelegt ist: das Erkennungssignal basierend auf einer zweiten Abtastfrequenz zu erfassen, wenn kein Ansteuersignal eingegeben wird, wobei die zweite Abtastfrequenz innerhalb eines Rauschfrequenzbereichs eines Anzeigebildschirms der elektronischen Vorrichtung liegt; und
wobei die Verarbeitungseinheit (1120) dazu ausgelegt ist: zu bestimmen, dass der Öffnungs- und Schließzustand der Abdeckung der elektronischen Vorrichtung variiert, wenn eine Variation des Erkennungssignals bei einer spezifischen Frequenz größer als ein dritter voreingestellter Wert ist.

13. Berührungssteuerung nach Anspruch 8, wobei das Erkennungssignal ein Erkennungssignal eines Signals mit einer spezifischen Frequenz ist, das von einem Anzeigebildschirm der elektronischen Vorrichtung ausgesendet wird, wobei die Signalerfassungseinheit (1110) dazu ausgelegt ist:
das Erkennungssignals basierend auf einer dritten Abtastfrequenz zu erfassen, wenn kein Ansteuersignal eingegeben wird, wobei die dritte Abtastfrequenz die spezifische Frequenz ist.

14. Berührungssteuerung nach Anspruch 13, wobei die Verarbeitungseinheit (1120) dazu ausgelegt ist:
zu bestimmen, dass die elektronische Vorrichtung in einen Schließzustand der Abdeckung eintritt, wenn ein Signalwert des Erkennungssignals größer als ein vierter voreingestellter Wert ist oder eine Variationsregel des Erkennungssignals mit einer Variationsregel des Signals mit der spezifischen Frequenz übereinstimmt; oder
zu bestimmen, dass die elektronische Vorrichtung in einen Öffnungszustand der Abdeckung eintritt, wenn ein Signalwert des Erkennungssignals kleiner als der vierte voreingestellte Wert ist oder eine Variationsregel des Erkennungssignals nicht mit der Variationsregel des Signals mit der spezifischen Frequenz übereinstimmt.

15. Touchpad, umfassend:
einen Ausgangskanal, der dazu ausgelegt ist, ein Erkennungssignal auszugeben; und
die Berührungssteuerung nach einem der vorhergehenden Ansprüche 8 bis 14.

## Revendications

1. Procédé de détection de l'ouverture et de la fermeture du couvercle d'un dispositif, où le procédé est exécuté par un contrôleur tactile dans un pavé tactile d'un dispositif électronique, le pavé tactile est situé sur un couvercle inférieur du dispositif électronique, un écran d'affichage est situé sur un couvercle supérieur du dispositif électronique, et le procédé étant **caractérisé en ce qu'**il comprend les étapes suivantes :
obtenir (110) un signal de détection émis par un canal de sortie du pavé tactile, l'écran d'affichage du dispositif électronique étant proche du pavé tactile lorsque le couvercle supérieur et le couvercle inférieur sont fermés, de sorte que l'écran d'affichage affecte le signal de détection émis par le canal de sortie du pavé tactile ; et
déterminer (120) si un état d'ouverture et de fermeture du couvercle du dispositif électronique varie en fonction d'une situation de variation du signal de détection causée par l'écran d'affichage.

2. Procédé selon la revendication 1, dans lequel le signal de détection est un signal de détection d'une capacité propre du pavé tactile.

3. Procédé selon la revendication 2, dans lequel déterminer (120) si l'état d'ouverture et de fermeture du couvercle du dispositif électronique varie en fonction de la situation de variation du signal de détection comprend les étapes suivantes :
déterminer que l'état d'ouverture et de fermeture du couvercle du dispositif électronique varie lorsqu'une variation du ou des signaux de détection émis par au moins N canaux de sortie est supérieure à une première valeur prédéfinie, où N est un nombre entier positif ; ou
déterminer que l'état d'ouverture et de fermeture du couvercle du dispositif électronique varie lorsqu'une variation de la valeur moyenne des signaux de détection émis par les canaux de sortie respectifs du pavé tactile est supérieure à une deuxième valeur prédéfinie.

4. Procédé selon la revendication 1, dans lequel le signal de détection est un signal de détection d'une capacité mutuelle du pavé tactile,
où l'obtention (110) du signal de détection émis par le canal de sortie du pavé tactile comprend l'étape suivante :
capturer le signal de détection sur la base d'une première fréquence d'échantillonnage, la première fréquence d'échantillonnage se situant dans une plage de fréquences de bruit d'un écran d'affichage du dispositif électronique ; et
où la détermination (120) de la variation de l'état d'ouverture et de fermeture du couvercle du dispositif électronique en fonction de la situation de variation du signal de détection comprend l'étape suivante :
déterminer que l'état d'ouverture et de fermeture du couvercle du dispositif électronique varie lorsqu'une variation du ou des signaux de détection sur le ou les noeuds de détection correspondant à au moins M des canaux de sortie est supérieure à une troisième valeur prédéfinie, où M est un nombre entier positif.

5. Procédé selon la revendication 1, dans lequel le signal de détection est un signal de détection de bruit,
où l'obtention (110) du signal de détection émis par le canal de sortie du pavé tactile comprend l'étape suivante :
capturer le signal de détection sur la base d'une deuxième fréquence d'échantillonnage lorsqu'aucun signal de commande n'est entré, où la deuxième fréquence d'échantillonnage se situe dans une plage de fréquences de bruit d'un écran d'affichage du dispositif électronique ; et
où la détermination (120) de la variation de l'état d'ouverture et de fermeture du couvercle du dispositif électronique en fonction de la situation de variation du signal de détection comprend l'étape suivante :
déterminer que l'état d'ouverture et de fermeture du couvercle du dispositif électronique varie lorsqu'une variation du signal de détection à une fréquence spécifique est supérieure à une troisième valeur prédéfinie.

6. Procédé selon la revendication 1, dans lequel le signal de détection est un signal de détection d'un signal à une fréquence spécifique émis par un écran d'affichage du dispositif électronique, où l'obtention (110) du signal de détection émis par le canal de sortie du pavé tactile comprend l'étape suivante :
capturer le signal de détection sur la base d'une troisième fréquence d'échantillonnage lorsqu'aucun signal de commande n'est entré, où la troisième fréquence d'échantillonnage est la fréquence spécifique.

7. Procédé selon la revendication 6, dans lequel déterminer (120) si l'état d'ouverture et de fermeture du couvercle du dispositif électronique varie en fonction de la situation de variation du signal de détection comprend les étapes suivantes :
déterminer que le dispositif électronique entre dans un état de fermeture du couvercle lorsqu'une valeur de signal du signal de détection est supérieure à une quatrième valeur prédéfinie ou qu'une règle de variation du signal de détection est conforme à une règle de variation du signal avec la fréquence spécifique ; ou
déterminer que le dispositif électronique entre dans un état d'ouverture du couvercle lorsqu'une valeur de signal du signal de détection est inférieure à la quatrième valeur prédéfinie ou qu'une règle de variation du signal de détection n'est pas conforme à la règle de variation du signal avec la fréquence spécifique.

8. Contrôleur tactile comprenant :
une unité de capture de signal (1110) configurée pour obtenir un signal de détection émis par un canal de sortie d'un pavé tactile d'un dispositif électronique, où le pavé tactile est situé sur un couvercle inférieur du dispositif électronique, un écran d'affichage est situé sur un couvercle supérieur du dispositif électronique, et le contrôleur est **caractérisé par le fait que** l'écran d'affichage du dispositif électronique est proche du pavé tactile lorsque le couvercle supérieur et le couvercle inférieur sont fermés,
de sorte que l'écran d'affichage affecte le signal de détection émis par le canal de sortie du pavé tactile ; et
une unité de traitement (1120) configurée pour déterminer si un état d'ouverture et de fermeture du couvercle du dispositif électronique varie en fonction d'une situation de variation du signal de détection.

9. Contrôleur tactile selon la revendication 8, dans lequel le signal de détection est un signal de détection d'une capacité propre du pavé tactile.

10. Contrôleur tactile selon la revendication 9, dans lequel l'unité de traitement (1120) est configurée pour :
déterminer que l'état d'ouverture et de fermeture du couvercle du dispositif électronique varie lorsqu'une variation du ou des signaux de détection émis par au moins N canaux de sortie est supérieure à une première valeur prédéfinie, où N est un nombre entier positif ; ou
déterminer que l'état d'ouverture et de fermeture du couvercle du dispositif électronique varie lorsqu'une variation de la valeur moyenne des signaux de détection émis par les canaux de sortie respectifs du pavé tactile est supérieure à une deuxième valeur prédéfinie.

11. Contrôleur tactile selon la revendication 8, dans lequel le signal de détection est un signal de détection d'une capacité mutuelle du pavé tactile,
où l'unité de capture de signal (1110) est configurée pour : capturer le signal de détection sur la base d'une première fréquence d'échantillonnage, où la première fréquence d'échantillonnage est située dans une plage de fréquences de bruit d'un écran d'affichage du dispositif électronique ; et
où l'unité de traitement (1120) est configurée pour : déterminer que l'état d'ouverture et de fermeture du couvercle du dispositif électronique varie lorsqu'une variation du ou des signaux de détection sur le ou les noeuds de détection correspondant à au moins M des canaux de sortie est supérieure à une troisième valeur prédéfinie, où M est un nombre entier positif.

12. Contrôleur tactile selon la revendication 11, dans lequel le signal de détection est un signal de détection de bruit,
où l'unité de capture de signal (1110) est configurée pour : capturer le signal de détection sur la base d'une deuxième fréquence d'échantillonnage lorsqu'aucun signal de commande n'est entré, où la deuxième fréquence d'échantillonnage se situe dans une plage de fréquences de bruit d'un écran d'affichage du dispositif électronique ; et
où l'unité de traitement (1120) est configurée pour : déterminer que l'état d'ouverture et de fermeture du couvercle du dispositif électronique varie lorsqu'une variation du signal de détection à une fréquence spécifique est supérieure à une troisième valeur prédéfinie.

13. Contrôleur tactile selon la revendication 8, dans lequel le signal de détection est un signal de détection d'un signal ayant une fréquence spécifique émise par un écran d'affichage du dispositif électronique, où l'unité de capture de signal (1110) est configurée pour :
capturer le signal de détection sur la base d'une troisième fréquence d'échantillonnage lorsqu'aucun signal de commande n'est entré, la troisième fréquence d'échantillonnage étant la fréquence spécifique.

14. Contrôleur tactile selon la revendication 13, dans lequel l'unité de traitement (1120) est configurée pour :
déterminer que le dispositif électronique entre dans un état de fermeture du couvercle lorsqu'une valeur de signal du signal de détection est supérieure à une quatrième valeur prédéfinie ou qu'une règle de variation du signal de détection est conforme à une règle de variation du signal avec la fréquence spécifique ; ou
déterminer que le dispositif électronique entre dans un état d'ouverture du couvercle lorsqu'une valeur de signal du signal de détection est inférieure à la quatrième valeur prédéfinie ou qu'une règle de variation du signal de détection n'est pas conforme à la règle de variation du signal avec la fréquence spécifique.

15. Pavé tactile comprenant :
un canal de sortie configuré pour émettre un signal de détection ; et
le contrôleur tactile selon l'une quelconque des revendications précédentes 8 à 14.
